# EUROPEAN PATENT SPECIFICATION

(11) **EP 2 832 116 B1**
(45) Date of publication and mention of the grant of the patent: **28.04.2021**
(21) Application number: 13767941.1
(22) Date of filing: 08.03.2013
(51) Int. Cl.: H04W 76/14, H04W 84/12

(54) **COMMUNICATIONS DEVICE, BASE STATION, COMMUNICATIONS NODE, COMMUNICATIONS SYSTEM AND METHOD THEREOF**
KOMMUNIKATIONSVORRICHTUNG, BASISSTATION, KOMMUNIKATIONSKNOTEN, KOMMUNIKATIONSSYSTEM UND VERFAHREN DAFÜR
DISPOSITIF DE COMMUNICATION, STATION DE BASE, NOEUD DE COMMUNICATION, SYSTÈME DE COMMUNICATION ET PROCÉDÉ CORRESPONDANT

(30) Priority: 30.03.2012 GB 201205806
(43) Date of publication of application: 04.02.2015
(73) Proprietor: NEC Corporation, Tokyo 108-8001 (JP)
(72) Inventor: LECROART, Benoit, Reading, Berkshire, RG20TD (GB); DELSOL, Thomas, Reading, Berkshire, RG20TD (GB)
(74) Representative: MacDougall, Alan John Shaw
(86) International application number: PCT/JP2013/001532
(87) International publication number: WO 2013/145592

(56) References cited:
- EP-A1- 1 753 253
- EP-A1- 2 161 962
- WO-A1-2009/028673
- WO-A1-2009/028928
- WO-A1-2010/034114
- WO-A2-2011/157129
- US-A1- 2010 009 675
- INTEL: "Operator Managed and Operator Assisted D2D", 3GPP DRAFT; S1-120063-MANAGED OR ASSISTED D2D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Kyoto, Japan; 20120213 - 20120217, 6 February 2012 (2012-02-06), XP050574728, [retrieved on 2012-02-06]
- GÃ BOR FODOR ET AL: "Design aspects of network assisted device-to-device communications", IEEE COMMUNICATIONS MAGAZINE, IEEE SERVICE CENTER, PISCATAWAY, US, vol. 50, no. 3, 1 March 2012 (2012-03-01), pages 170-177, XP011429640, ISSN: 0163-6804, DOI: 10.1109/MCOM.2012.6163598

## Description

### Technical Field

The present invention relates to a communications device. The invention has particular but not exclusive relevance to wireless communications systems and devices thereof operating according to the 3rd Generation Partnership Project (3GPP) standards or equivalents or derivatives thereof. The invention has particular although not exclusive relevance to the management of direct communication from one communications device to another.

### Background Art

Under the 3GPP standards, a NodeB (or an eNB in LTE) is the base station via which mobile devices connect to a core network and communicate to other mobile devices or remote servers. For simplicity, the present application will use the term base station to refer to any such base stations. Communications devices might be, for example, mobile communications devices such as mobile telephones, smartphones, user equipment, personal digital assistants, laptop computers, web browsers, and the like. 3GPP standards also make it possible to connect non-mobile user equipment to the network, such as Wi-Fi routers, modems, which can be implemented as a part of a (generally) stationary apparatus. For simplicity, the present application refers to mobile communications devices in the description but it will be appreciated that the technology described can be implemented on any mobile and "non-mobile" equipment that can connect to such a core network.

The latest developments of the 3GPP standards are referred to as the Long Term Evolution (LTE) of EPC (Evolved Packet Core) network and E-UTRA (Evolved UMTS Terrestrial Radio Access Network). LTE makes it possible for User Equipment (UE), such as mobile devices to connect to the core network using alternative, non-3GPP radio access technologies (RAT) as well, for example, using the Wireless Local Area Network (WLAN) standard and the like. The supported access technologies are covered in the 3GPP TS 23.402 standards document.

A Mobility Management Entity (MME) in the core network manages the connections of the mobile devices with the core network. When a mobile device attaches to the LTE network via a base station, the MME sets up a default Evolved Packet System (EPS) Bearer between the mobile device and a gateway in the core network. An EPS Bearer defines a transmission path through the network and assigns an IP address to the mobile device to be used by the mobile device to communicate with remote servers or other mobile devices. An EPS Bearer also has a set of data transmission characteristics, such as quality of service, data rate and flow control parameters, which are defined by the subscription associated with the mobile device and are established by the MME upon registration of the mobile device with the network.

The EPS Bearer is thus managed by the MME, which signals to the mobile device when it needs to activate, modify, or deactivate a particular EPS Bearer. Thus there are two connections between the mobile device and the communication network: one for the user data transmitted using the established EPS bearer (also known as the user plane) and another one for managing the EPS Bearer itself (also known as the control plane).

In future releases of the 3GPP standards, there are plans to introduce a feature of direct device-to-device (D2D) radio communication when the mobile device can communicate user data to another device that is within the transmission range of the first mobile device without having to route the user data via the core network. This direct radio communication would result in better utilization of the network resources without sacrificing the service quality to the end user.

Intel: "Operator Managed and Operator Assisted D2D", 3GPP Draft, S1-120063, 3GPP, Mobile Competence Centre; 650 Route des Lucioles, F-06921, Sophia-Antipolis, Cedex, France; vol. SA WG1, no. Kyoto, Japan, 6 Februrary 2012 discloses uses cases for two D2D operating modes, namely "operator managed" and "operator controlled" modes. The use case associated with the former mode requires operator management in order to maintain session QoS and the use case of the latter mode deals with data sessions that are triggered by proximity (i.e. they do not exist until the D2D link is established).

G. Fodor et al.: "Design Aspects of Network Assisted Device-to-Device Communications", IEEE Communications Magazine, IEEE Service Centre, Piscataway, USA, col. 50, no. 3, 1 March 2012, pages 170-177 DOI: 10.1109/MCOM.2012.6163598 discloses that Device-to-device (D2D) communications underlying a cellular infrastructure has been proposed as a means of taking advantage of the physical proximity of communicating devices. Relative to traditional cellular methods, there is a need to design new peer discovery methods, physical layer procedures and radio resource management algorithms that help realize the potential of D2D communications. The 3GPP Long Term Evolution system is used as a baseline for D2D design

Document EP2161962 deals with the establishment of a direct WLAN connection between two UEs, directed by the cellular network. In particular it defines that the network transmits WLAN ad-hoc parameters to the UE for configuring the WLAN D2D link.

Document WO 2011/157129 discloses the negotiation, between the UE and the SGW or eNB, of the offloading function in the UE/SGW/eNB for the data offloading using a WLAN bearer between the UE and an WLAN AP or on the cellular link. In particular, the offloading function is configured to use either the LTE TFT or an built-in packet filter.

### Citation List

### Non Patent Literature

**NPL 1:** 3GPP TS 23.402 V10.0.0 (2010-06)

### Summary of Invention

### Technical Problem

However, such direct E-UTRAN connections still use network resources (e.g. frequency / time resources) and require associated control signalling (e.g. to control transmission powers, synchronisation etc..) and hence whilst D2D radio communication will likely provide some benefits the extent of those benefits is limited.

Accordingly, preferred embodiments of the present invention aim to provide methods and apparatus which overcome or at least partially alleviate the above issues.

Although for efficiency of understanding for those of skill in the art, the invention will be described in detail in the context of a 3GPP system (UMTS, LTE), the principles of the invention can be applied to other systems in which mobile devices or User Equipment (UE) access a core network using multiple access technologies.

### [Solution to Problem]

Aspects of the invention are recited in the appended independent claims.

In an example there is provided a communications device for use in a communications network having a core network and a base station, the communications device comprising: means for communicating with the base station using a first access technology; means for communicating with a local area network via an access node using a second access technology; wherein the means for communicating with the base station using the first access technology is operable to receive, using the first access technology, control information for configuring a communication bearer for communication with the local area network via said access node using said second access technology; and means for configuring, based on said received control information, said communication bearer for communication with the local area network via said access node using said second access technology.

The communications device may comprise said access node. Alternatively, the communications device may communicate with a remote access node that does not form part of said communications device.

The means for communicating with the local area network may receive, using said second access technology, further control information for configuring a communication bearer for communication with the local area network via said access node using said second access technology; and wherein said further control information is provided to said access node by a communications node of said core network.

The control information may comprise at least one of an indication to authenticate with said local area network, an access stratum parameter, and a non-access stratum parameter. In another aspect, the control information may identify at least one of an IP allocation scheme, an IP address, an IP mask, and a default IP router to be used on the local area network.

The means for communicating with the base station may communicate using a radio resource control signalling protocol. In this case, the control information can be included in radio resource control signalling communicated in accordance with said protocol.

The control information may be processed by a local area network client of the communications device.

The communications device may further comprise means for providing information relating to at least one of said access node, said local area network, and a geographical location of said communications device. The local area network may be a wireless local area network and said communication bearer may be a wireless local area network bearer.

The first access technology may be an access technology according to any of the evolved UMTS terrestrial radio access network (E-UTRA) standard, the global system for mobile communications (GSM) standard, the wideband code division multiple access (W-CDMA) standard, and the CDMA2000 standard. The second access technology may be an access technology according to one of a wireless local area network (WLAN) standard, a worldwide interoperability for microwave access (WiMAX) standard, and a Bluetooth standard.

The communications device may communicate with a further communications device using said communication bearer. In this case, the communication with said further communications device may be a device to device communication via said access node.

The communications device may further comprise means for configuring a radio bearer in accordance with the received control information.

The access node may be an access point or a master device for providing access using the second access technology. The communications device may be a mobile communications device (e.g. a mobile telephone).

In one example there is provided a base station for use in a communications network having a core network and at least one communications device, the base station comprising: means for communicating with the at least one communications device using a first access technology; and means for communicating with a communications node of said core network; wherein said means for communicating with a communications node of said core network is operable to receive control information for configuring a communication bearer for the at least one communications device for communication with a local area network via an access node using a second access technology; and wherein said means for communicating with the communications device is operable to transmit, using said first access technology, said control information received from said communications node of said core network.

In another example there is provided a communications node for use in a communications network having a core network, a base station and at least one communications device operable to communicate with said base station using a first radio access technology, the communications node comprising: means for communicating with said base station; and means for obtaining control information for configuring a communication bearer for said at least one communications device for communication with a local area network via an access node using a second radio access technology; wherein said means for communicating with said base station is operable to send, to said base station, said control information so obtained.

In one yet another example, there is provided a communications system comprising the communications device, the base station, and the communications node according to any of the above aspects.

In another example there is provided a method performed by a communications device in a communications network having a core network and a base station, the method comprising: communicating with the base station using a first radio access technology; communicating with a local area network via an access node using a second radio access technology; wherein said step of communicating with the base station using the first radio access technology comprises receiving, using said first radio access technology, control information for configuring a communication bearer for communication with the local area network via said access node using said second radio access technology; and configuring, based on said received control information, said communication bearer for communication with the local area network via said access node using said second radio access technology.

In another example, there is provided a method performed by a base station in a communications network having a core network and at least one communications device, the method comprising: communicating with the at least one communications device using a first radio access technology; and communicating with a communications node of said core network; wherein said step of communicating with a communications node of said core network comprises receiving control information for configuring a communication bearer for the at least one communications device for communication with a local area network via an access node using a second radio access technology; and wherein said step of communicating with the communications device comprises transmitting, using said first radio access technology, said control information received from said communications node of said core network.

In another example, there is provided a method performed by a communications node in a communications network having a core network, a base station and at least one communications device operable to communicate with said base station using a first radio access technology, the method comprising: communicating with said base station; and obtaining control information for configuring a communication bearer for said at least one communications device for communication with a local area network via an access node using a second radio access technology; wherein said step of communicating with said base station comprises sending, to said base station, said control information so obtained.

There is also provided, for all methods disclosed, corresponding computer programs or computer program products for execution on corresponding user equipment or network communications devices.

### Advantageous Effects of Invention

According to the present invention, it is possible to provide a method and a communications device for direct device-to-device radio communication to result in better utilization of the network resources without sacrificing the service quality to the end user.

### Brief Description of Drawings

[fig. 1] Fig. 1 illustrates schematically a cellular telecommunications system to which embodiments of the invention may be applied.
[fig. 2] Fig. 2 illustrates an EPS bearer architecture used in the communications system illustrated in Fig. 1
[fig.3]Fig. 3 illustrates the WLAN EPS bearer structure compared to the EPS bearer structure used in the communications system shown in Fig. 1.
[fig.4]Fig. 4 is a block diagram of a WLAN manager forming part of the system shown in Fig. 1.
[fig.5]Fig. 5 is a block diagram of a mobility management entity (MME) forming part of the system shown in Fig. 1.
[fig.6]Fig. 6 is a block diagram of a base station forming part of the system shown in Fig. 1.
[fig.7]Fig. 7 is a block diagram of a mobile device forming part of the system shown in Fig. 1.
[fig.8]Fig. 8 illustrates the transfer of WLAN control information between the core network 7 and a mobile device 3 shown in Fig. 1.
[fig.9]Fig. 9 is a signalling diagram indicating a procedure by which the MME remotely sets up a WLAN connection for a mobile device forming part of the system shown in Fig. 1.
[fig. 10] Fig. 10 is a signalling diagram indicating a procedure by which the mobile device forming part of the system shown in Fig. 1 applies the WLAN control information.
[fig.11]Fig. 11 is a signalling diagram indicating a variation on the procedure shown in Fig. 9.

### Description of Embodiments

### Overview

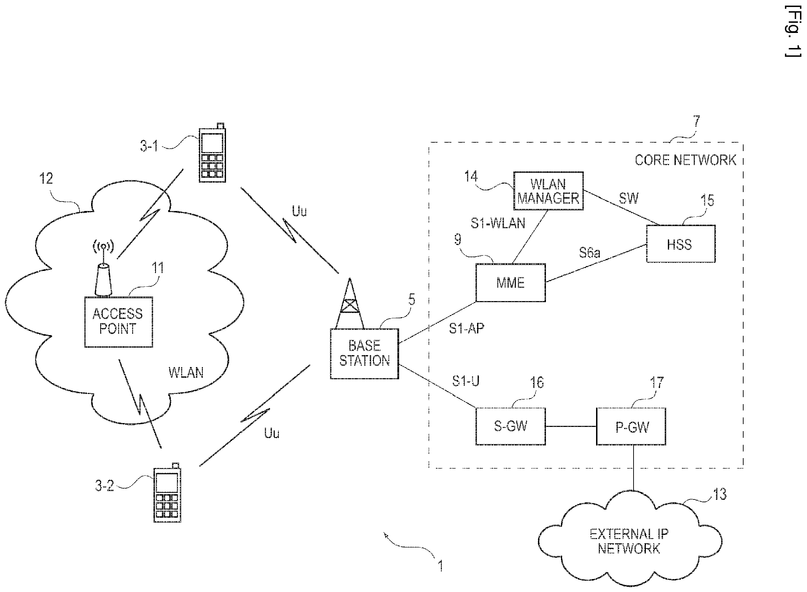

Fig. 1 schematically illustrates a telecommunications network 1 in which users of mobile devices 3 can communicate with each other and other users via E-UTRAN base stations 5 and a core network 7 using an E-UTRA radio access technology (RAT). As those skilled in the art will appreciate, whilst two mobile devices 3-1, and 3-2 and one base station 5 are shown in Fig. 1 for illustration purposes the system, when implemented, will typically include other base stations and mobile devices.

As is well known, a mobile device 3 may enter and leave the areas (i.e. radio cells) served by the base stations 5 as the mobile device 3 is moving around in the geographical area covered by the telecommunications system 1. In order to keep track of the mobile devices 3 and to facilitate movement between the different base stations 5, the core network 7 comprises a mobility management entity (MME) 9 which is in communication with the base stations 5 coupled to the core network 7.

In this embodiment the mobile devices 3 can be connected to the WLAN 12, via an access point (AP) 11 when in the coverage area of the access point 11. The mobile devices 3 can continue to access to the core network 7 through the base station 5. The MME 9 also continues to keep track of those mobile devices 3. The WLAN Manager 14, which is located in the core network 7, remotely controls the connection of the mobile devices 3 to the WLAN 12. This is achieved by connecting the WLAN Manager 14 to a WLAN client of the mobile device 3.

A WLAN 12 usually has an access point 11 that performs management of the WLAN, such as authorisation and authentication of the connected or participating devices, allocation and sharing of wireless resources, and other services like packet broadcast or power saving control. Depending on the WLAN technology used, the features of the access point 11 can be centralised on dedicated infrastructure equipment such as presented in Fig. 1, or distributed on a number of devices, e.g. on the devices participating in the WLAN. Depending on the WLAN technology, this management function can have different names: for example, it can be named access point in 802.11 technologies, Master in Bluetooth technologies, and possibly named differently in other WLAN technologies.

In order to determine whether a mobile device 3 is within the coverage area of the WLAN 12, different methods based on geographical localisation or the analysis of the radio measurements can be used. Such methods are described in e.g. 3GPP Technical Standard (TS) 23.271 titled Functional stage 2 description of Location Services (LCS). Alternatively the mobile devices 3 can perform radio search for surrounding WLANs. For example, on an 802.11 type WLAN, the mobile device 3 can perform a scanning on different channels for the service set identifier (SSID) of a nearby WLAN 12. In a preferred embodiment, MME 9 can have access to localisation information of the mobile device 3 and can determine that a mobile device 3 is able to access a given WLAN 12. In another embodiment, the WLAN manager 14 requests the mobile device 3 to perform WLAN radio measurement and determines that the mobile device 3 is able to connect to a specific access point 11.

The base station 5 is connected to the MME 9 via an "S1-AP" interface, also known as "S1-MME" interface, which is defined in the 3GPP Technical Standard (TS) 36.413. The MME 9 is also connected to the WLAN Manager 14 and the home subscriber server (HSS) 15 via the so-called "S1-WLAN" and "S6a" interfaces, respectively. The WLAN Manager 14 and the HSS 15 are also connected via an interface, herein denoted by "SW". For each mobile device 3, the HSS 15 stores the subscription data (such as settings and preferences) and the authorisations for accessing the core network 7 and the WLAN 12. The MME 9 and the WLAN Manager 14 use the data stored in the HSS 15 for managing the connection of the mobile device 3 to the core network 7.

The mobile device 3 and the base station 5 are connected via an air interface, the so-called "Uu" interface, and the base station 5 and the serving gateway (S-GW) 16 are connected via an "Sl-U" interface. From the core network 7, connection to an external IP network 13, such as the Internet, is provided via the packet data network gateway (P-GW) 17 linked to the SGW 16. It will be appreciated that, whilst shown as separate entities, the functionalities of the S-GW 16 and the P-GW 17 could be implemented in a single gateway element.

When connected to the WLAN 12, the mobile device 3 and the access point 11 are connected via a WLAN air interface. In this example, the access point 11 might be directly coupled to the core network 7, but it might also be coupled via an external IP network 13 (e.g. the internet). However, in other examples, the access point is not coupled to and thus operates independently from the core network 7.

Advantageously, in the telecommunications network 1, when a mobile device 3 that is in the vicinity of the access point 11 requires a communications connection to be established, the communications nodes of the core network manage the establishment of the required communications connection via the access point 11 and the WLAN 12. Where the communications connection is in pursuance of a voice or data connection to or from another mobile device 3 in the vicinity of the access point 11, the communications nodes of the core network are configured to manage both ends of the connection, via the access point 11 and the WLAN 12, to establish a connection in which user data can be communicated over the WLAN 12 thereby avoiding use of the LTE communication resources that would otherwise be required if the communication was via the Uu air interface and core network 7 or via currently proposed device to device communication. Similarly, where the communications connection is in pursuance of a voice or data connection to or from another mobile device in the vicinity of a different access point of the WLAN 12 (or of a different local area network in a different location) the communications nodes of the core network are advantageously able to manage both ends of the connection to establish a connection in which user data can be communicated over the local area network(s) and internet (if applicable). Moreover some benefit can also be derived in scenarios in which the communications connection is in pursuance of a voice or data connection to or from another mobile device that is not in the vicinity of an access point of any local area network. In this case the communications nodes of the core network still manage both ends of the connection albeit that one end of the connection comprises a connection in which user data can be communicated via the E-UTRA part of the telecommunications network 1 and the other end of the connection comprises a connection in which user data can be communicated via the access point 11.

More specifically, in this embodiment, when a communications connection with a mobile device 3 in the vicinity of the access point 11 is to be initiated, the MME 9 advantageously receives authorisation from the HSS 15 for the mobile device 3 to access the WLAN 12. The MME 9 then requests the WLAN manager 14 to provide a WLAN configuration for setting up a connection between the mobile device 3 and the access point 11. This connection comprises one or more communications bearers over the WLAN 12 (which may be referred to, for example, as a 'WLAN' EPS Bearer and/or an associated 'WLAN' Radio Bearer). The WLAN manager 14 provides the necessary WLAN control information (WLAN configuration), which is sent from the MME 9 to the mobile device 3 via the base station 5. In the mobile device 3, the WLAN control information is processed by a WLAN client to set up the WLAN EPS bearer (and associated radio bearers) for the transfer of user plane data between the mobile device 3 and the access point 11. Since the WLAN EPS Bearer is set up for communicating via an access point 11 instead of via a base station 5, the bearer structure used by the core network 7 is thus effectively extended to the alternative access technology as well. This is achieved by managing the WLAN client of the mobile device 3 remotely from the core network 7.

It can be seen, therefore, that allowing the communications bearer(s) such as the WLAN EPS Bearer to be configured and managed remotely by the core network 7 is particularly advantageous at least in case of the core network 7 setting up a mobile originated (MO) or a mobile terminated (MT) call for the mobile device 3.

### EPS Bearer Architecture

Before discussing further details of the above scenarios, it is helpful to set out the architecture of the EPS bearers used to carry the data between the mobile devices 3 and the core network 7 via the base station 5, the S-GW 16 and the P-GW 17.

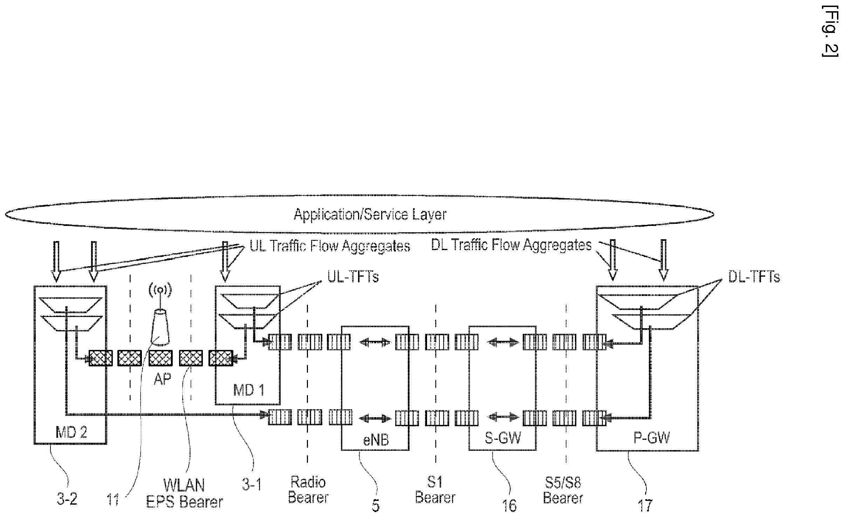

Fig. 2 gives an overview of the EPS architecture between mobile device 3-1 and the P-GW 17 and also between mobile device 3-2 and the P-GW 17. Further details can be found in 3GPP TS 23.401 V11.1 0.

In summary, an EPS bearer is realized by the following elements:
- In the mobile device 3, the UL TFT (Uplink Traffic Flow Template) maps a traffic flow aggregate to an EPS bearer in the uplink direction;
- In the P-GW 17, the DL TFT (downlink Traffic Flow Template) maps a traffic flow aggregate to an EPS bearer in the downlink direction;
- A radio bearer (as defined in TS 36.300 VI 1.1.0) is a radio link between two points, with a specific set of associated characteristics, such as quality of service, volume of traffic, frequency allocation, modulation, synchronisation, etc. Radio bearers can be seen as channels offered by Layer 2 to higher layers for the transfer of data. The radio bearer transports the packets of an EPS bearer between a mobile device 3 and a base station 5. If a radio bearer exists, there is a one-to-one mapping between an EPS bearer and this radio bearer;
- An S1 bearer transports the packets of an EPS bearer between a base station 5 and an S-GW 16;
- An E-RAB (E-UTRAN Radio Access Bearer) refers to the concatenation of an S 1 bearer and the corresponding radio bearer, as defined in TS 36.300 VI 1.1.0.
- An S5/S8 bearer transports the packets of an EPS bearer between the S-GW 16 and the P-GW 17;
- The mobile device 3 stores a mapping between an uplink packet filter and a radio bearer to create the mapping between a traffic flow aggregate and a radio bearer in the uplink;
- The P-GW 17 stores a mapping between a downlink packet filter and an S5/S8 bearer to create the mapping between a traffic flow aggregate and an S5/S8 bearer in the downlink;
- The base station 5 stores a one-to-one mapping between a radio bearer and an S1 Bearer to create the mapping between a radio bearer and an S1 bearer in both the uplink and the downlink;
- The S-GW 16 stores a one-to-one mapping between an S1 Bearer and an S5/S8 bearer to create the mapping between an S1 bearer and an S5/S8 bearer in both the uplink and downlink.

The P-GW 17 routes downlink packets to the different EPS bearers based on the downlink packet filters in the TFTs assigned to the EPS bearers in the PDN connection. Similarly, the mobile devices 3 route uplink packets to the different EPS bearers based on the uplink packet filters in the TFTs assigned to the EPS bearers in the PDN connection.

Fig. 2 also illustrates the EPS architecture as extended to accommodate one or more WLAN EPS bearer(s). In this architecture, user traffic is routed directly between the mobile devices 3, i.e. using only an access point 11 instead of using a base station 5, a S-GW 16 and a P-GW 17.

### WLAN EPS and Radio Bearers

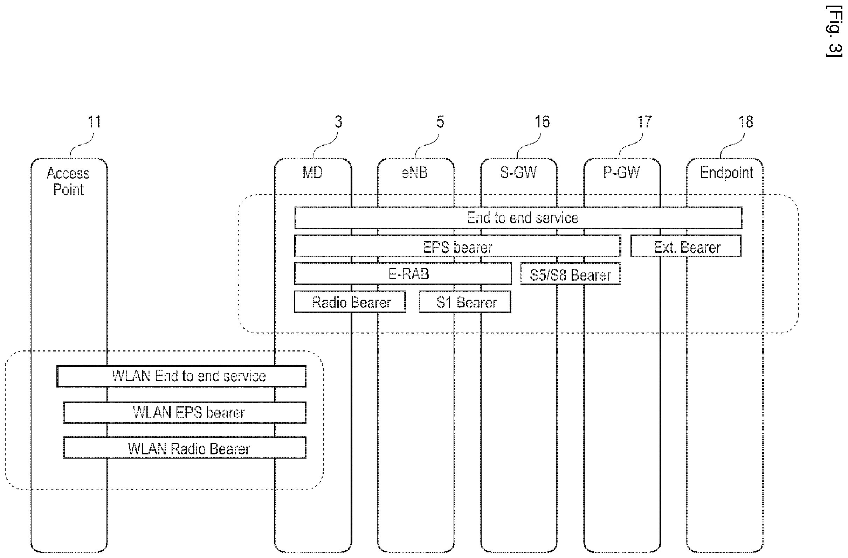

Fig. 3 illustrates the WLAN bearer structure compared to the bearer structure used in the E-UTRA part of the communications system shown in Fig. 1.

Generally, in communications systems, a bearer can be defined as a pipeline connecting two or more points in the communications system, and in which data flows. Thus an EPS bearer may be regarded as a pipeline for data to be sent across the Evolved Packet System (e.g. core network 7), i.e. between the mobile device 3 and the P-GW 17. In order to provide an end-to-end service for the mobile device 3, the P-GW 17 complements the EPS bearer with an external bearer (i.e. a bearer which is external to the core network 7) towards the other endpoint of communication 18.

The EPS bearer used in the LTE part of the communications system may be considered as a plurality of components - an S5/S8 bearer between the P-GW 17 and the S-GW 16 and an E-UTRAN Radio Access Bearer (E-RAB) between S-GW 16 and the mobile device 3. The E-RAB may, itself, be further divided into an S1 Bearer between the S-GW 16 and the base station 5, and a Radio Bearer between the base station 5 and the mobile device 3.

As can be seen therefore, in order to provide an EPS Bearer over the core network 7, a number of bearer components and a number of network entities are used. The embodiments described herein make use of an alternative 'EPS' Bearer routed via a WLAN 12, which is shown between the mobile device 3 and the access point 11 in Fig. 3. Although a WLAN end-to-end service is also shown between the mobile device 3 and the access point 11, the other endpoint might be another mobile device 3. The WLAN EPS Bearer is established between the mobile device 3 and the access point 11 and, since there are no intermediary elements involved, the two endpoints of the WLAN EPS Bearer correspond to the endpoints of the WLAN Radio Bearer. The MME 9 manages the WLAN EPS bearers and the associated WLAN radio bearers.

The WLAN EPS bearer is defined in a similar manner to an EPS bearer of the LTE part of the communications system. The WLAN EPS bearer represents the virtual connection between a mobile device 3 and the gateway accessible on the WLAN 12. The WLAN EPS bearer has an associated set of control/configuration parameters including, for example, IP address allocation related parameters and the traffic flow template filtering related parameters to be used by the mobile device 3.

The WLAN radio bearer is defined in a similar fashion as the radio bearer used for the E-UTRAN. The WLAN radio bearer represents the wireless link between a mobile device 3 and the access point 11. It is associated with specific Quality of Service (QoS) parameters that depend on the supported WLAN technologies. As an example, if the mobile device 3 implements the IEEE 802.11e WLAN standard, it also supports the Enhanced Distributed Channel Access (EDCA) transmission categories, such as background, best-effort, video, etc. Other variants of the WLAN standard provide support for further features, which are not described here for the sake of simplicity.

Although in Fig. 3, the WLAN bearers are shown to be established between the mobile device 3 and an access point 11 is shown, the skilled person would understand that a wireless connection can be set up between two mobile devices 3 with or without using a distinct access point there between. Therefore, a second mobile device (not shown) can be used in addition to (or instead of) the access point 11 of Fig. 3.

### WLAN Manager

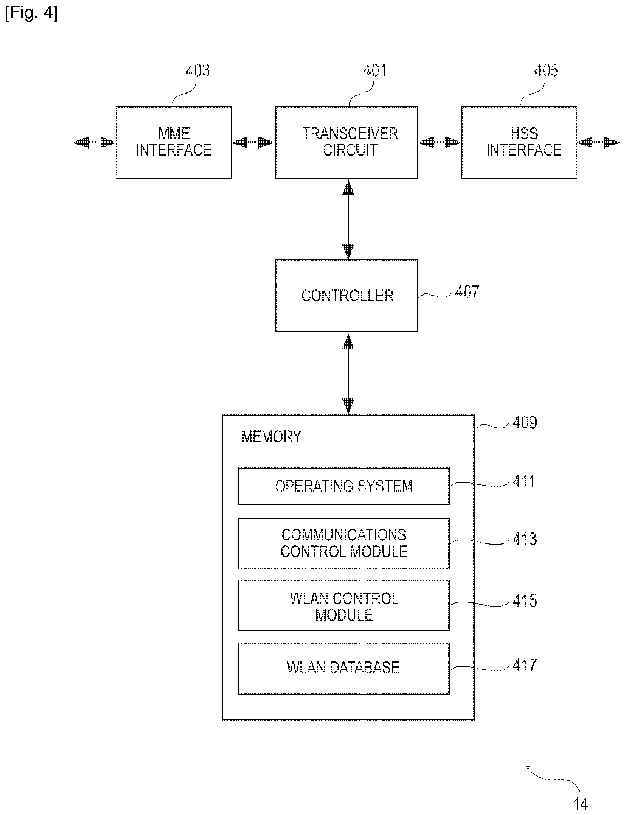

Fig. 4 is a block diagram illustrating the main components of the WLAN Manager 14 shown in Fig. 1. As shown, the WLAN Manager 14 includes transceiver circuit 401 which is operable to transmit signals to, and to receive signals from the MME 9 and the HSS 15 via an MME interface 403 and a home subscriber server interface 405, respectively. The operation of the transceiver circuit 401 is controlled by a controller 407 in accordance with software stored in memory 409. The software includes, among other things an operating system 411, a communications control module 413, a WLAN control module 415, and a WLAN database 417.

The communications control module 413 is operable to control the communication between the WLAN Manager 14 and the MME 9 and other network entities that are connected to the WLAN Manager 14.

The WLAN control module 415 is operable to generate the WLAN control information. The WLAN control information might be generated, for example, upon request by the MME 9 or the HSS 15. The WLAN control information might be specific for the mobile device 3 or specific for the WLAN 12. The WLAN control information might comprise, for example, the WLAN EPS Bearer (i.e. TFT filters, QoS) and/or the WLAN Radio Bearer configuration.

The WLAN database 417 holds a list of WLANs 12 that are known to the core network 7. The mobile devices 3 (and optionally, their IP addresses) might be associated with a number of WLANs 12 in the WLAN database 417.

### Mobility Management Entity

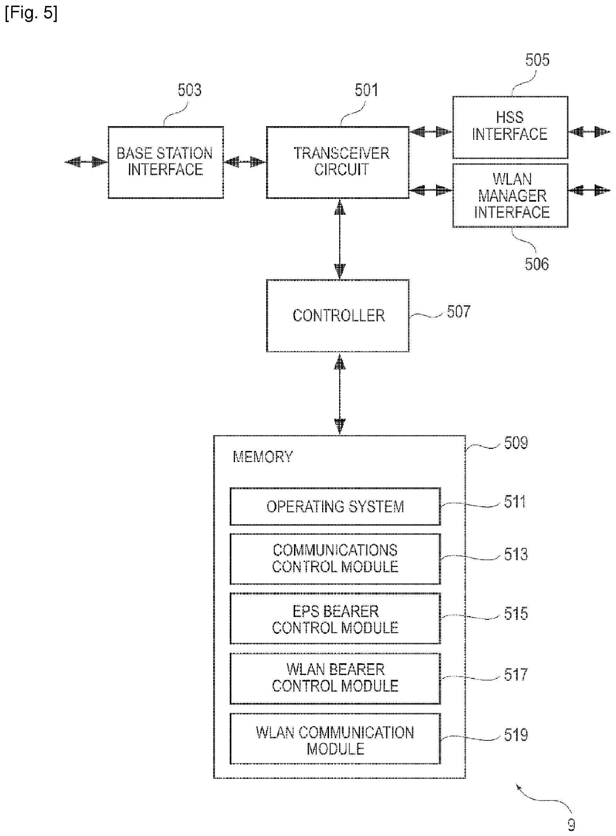

Fig. 5 is a functional block diagram illustrating the main components of the mobility management entity 9 shown in Fig. 1. As shown, the MME 9 includes transceiver circuit 501 which is operable to transmit signals to, and to receive signals from the base station 5 and a core network 7 via a base station interface 503, a home subscriber server interface 505, and a WLAN manager interface 506, respectively. The operation of the transceiver circuit 501 is controlled by a controller 507 in accordance with software stored in memory 509. The software includes, among other things an operating system 511, a communications control module 513, an EPS bearer control module 515, a WLAN bearer control module 517, and a WLAN communication module 519.

The communications control module 513 is operable to control the communication between the MME 9 and the network entities that are connected to the base station 5.

The EPS bearer control module 515 is operable to control the setting up of EPS bearers for a mobile device 3 for communication via the E-UTRA part of the communications system and associated core network. The EPS bearer control module 515 is also operable to provide control information related to any radio bearer associated with an EPS bearer (i.e. TFT filters, QoS).

The WLAN bearer control module 517 is operable to control the setting up of WLAN EPS bearer for a mobile device 3 by providing the necessary control information to a WLAN client of the mobile device 3. The WLAN bearer control module 517 is also operable to provide control information related to the WLAN radio bearer associated with the WLAN EPS bearer (i.e. TFT filters, QoS) to the WLAN client of the mobile device 3.

The WLAN communication module 519 is operable to control the transfer of the WLAN control information between the WLAN manager and a mobile device 3. For example, the WLAN communication module 519 can communicate the WLAN control information to the mobile device 3 via a mobility management entity 9 and/or a base station 5 serving this mobile device 3.

### Base Station

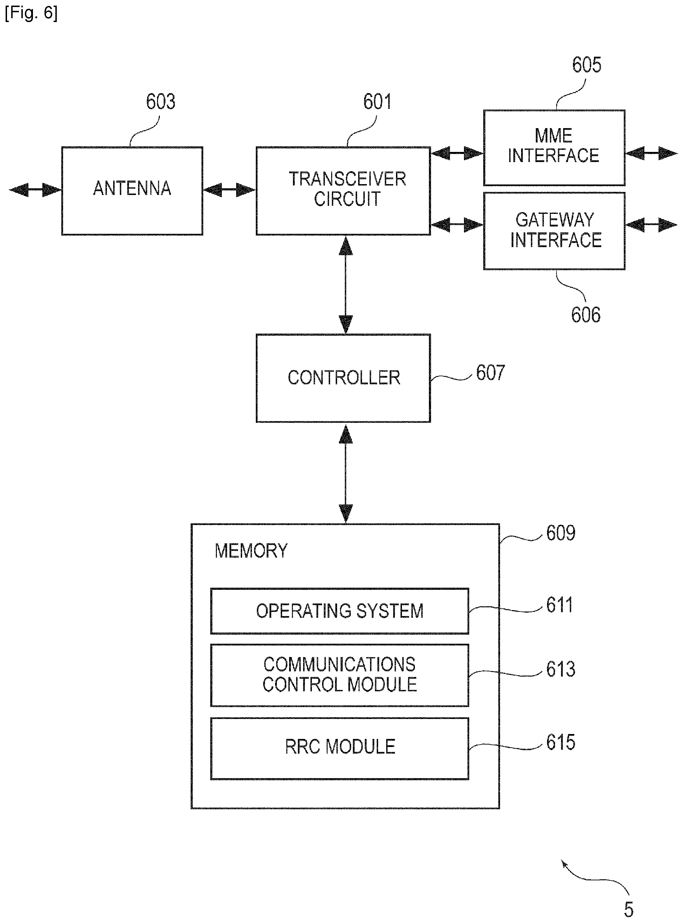

Fig. 6 is a block diagram illustrating the main components of the base station 5 shown in Fig. 1. As shown, the base station 5 has a transceiver circuit 601 for transmitting signals to and for receiving signals from the mobile devices 3 via one or more antenna 603, a mobility management entity interface 605 for transmitting signals to and for receiving signals from the mobility management entity 9, and a gateway interface 606 for transmitting signals to and for receiving signals from the S-GW 16 and the P-GW 17. The base station 5 has a controller 607 to control the operation of the base station 5. The controller 607 is associated with a memory 609. Although not necessarily shown in Fig. 6, the base station 5 will of course have all the usual functionality of a cellular telephone network base station and this may be provided by any one or any combination of hardware, software and firmware, as appropriate. Software may be pre-installed in the memory 609 and/or may be downloaded via the communications network 1 or from a removable data storage device (RMD), for example. The controller 607 is configured to control the overall operation of the base station 5 by, in this example, program instructions or software instructions stored within memory 609. As shown, these software instructions include, among other things, an operating system 611, a communications control module 613, and an RRC module 615.

The communications control module 613 is operable to control the communication between the base station 5 and the mobile devices 3 and other network entities that are connected to the base station 5. The communications control module 613 also controls the separate flows of downlink user traffic and control data to be transmitted to the mobile devices 3 associated with this base station 5 including, for example, control data for managing configuration and maintenance of the WLAN EPS and Radio bearers for a mobile device 3 from the MME 9.

The RRC module 615 is operable to generate, send and receive signalling messages formatted according to the RRC standard. For example, such messages are exchanged between the base station 5 and the mobile devices 3 that are associated with this base station 5. The RRC messages may include, for example, the control data for managing configuration and maintenance of the WLAN EPS and Radio bearers for a mobile device 3 provided by the MME 9.

### Mobile Device

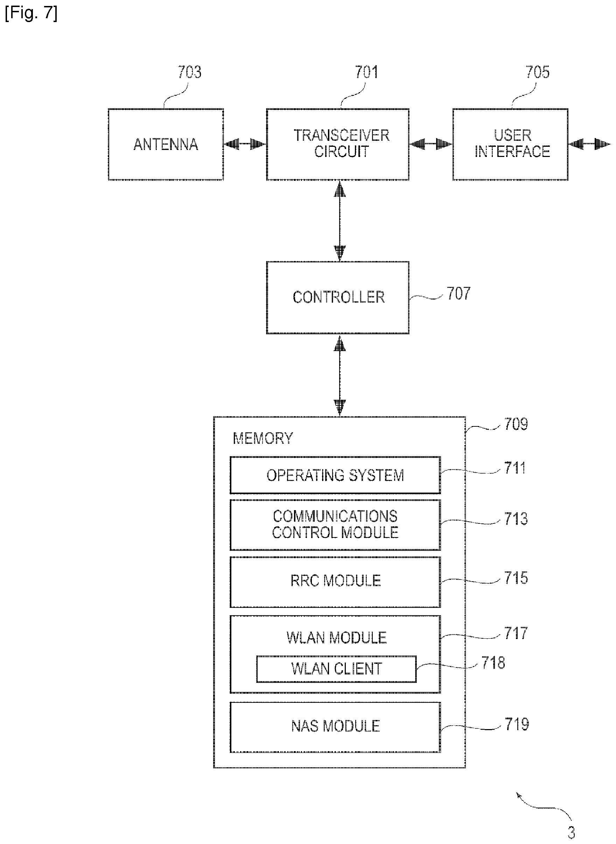

Fig. 7 is a block diagram illustrating the main components of the mobile device 3 shown in Fig. 1. As shown, the mobile device 3 has a transceiver circuit 701 that is operable to transmit signals to and to receive signals from a base station 5 via one or more antenna 703. The mobile device 3 has a controller 707 to control the operation of the mobile device 3. The controller 707 is associated with a memory 709 and is coupled to the transceiver circuit 701. Although not necessarily shown in Fig. 7, the mobile device 3 will of course have all the usual functionality of a conventional mobile device 3 (such as a user interface 705) and this may be provided by any one or any combination of hardware, software and firmware, as appropriate. Software may be pre-installed in the memory 709 and/or may be downloaded via the telecommunications network or from a removable data storage device (RMD), for example.

The controller 707 is configured to control overall operation of the mobile device 3 by, in this example, program instructions or software instructions stored within memory 709. As shown, these software instructions include, among other things, an operating system 711, a communications control module 713, an RRC module 715, a WLAN module 717, and a non-access stratum (NAS) module 719.

The communications control module 713 is operable to control the communication between the mobile device 3 and other mobile devices 3 or the base station 5 or the access point 11. The communications control module 713 also controls the separate flows of uplink data and control data that are to be transmitted to the other mobile device 3, to the access point 11, or to the base station 5.

The RRC module 715 is operable to send and receive messages according to the RRC protocol, via the transceiver circuit 701 including, for example, the RRC messages comprising control data for managing configuration and maintenance of the WLAN EPS and Radio bearers for a mobile device 3 provided by the MME 9 with the support of the WLAN Manager 14.

The WLAN module 717 comprises a WLAN client 718 and is operable to control communication via the access point 11 based on the information stored in the memory 709 of the mobile device 3 and/or based on information received from the mobility management entity 9 via the base station 5 (e.g. in an RRC or other message). The WLAN module 717 manages the configuration and maintenance of the WLAN EPS and Radio bearers for a mobile device 3 based on the control information received from the MME 9 for example by sending appropriate control data to the NAS module 719 for setting up the WLAN EPS bearer.

The non-access stratum module 719 is operable to send and receive control data to core network 7 (e.g. the MME 9) using Layer 3 signalling. The NAS module receives, for example, control data sent from core network 7 (e.g. the MME 9) via the WLAN client 718 configuring the WLAN EPS bearers for a mobile device 3.

### Operation

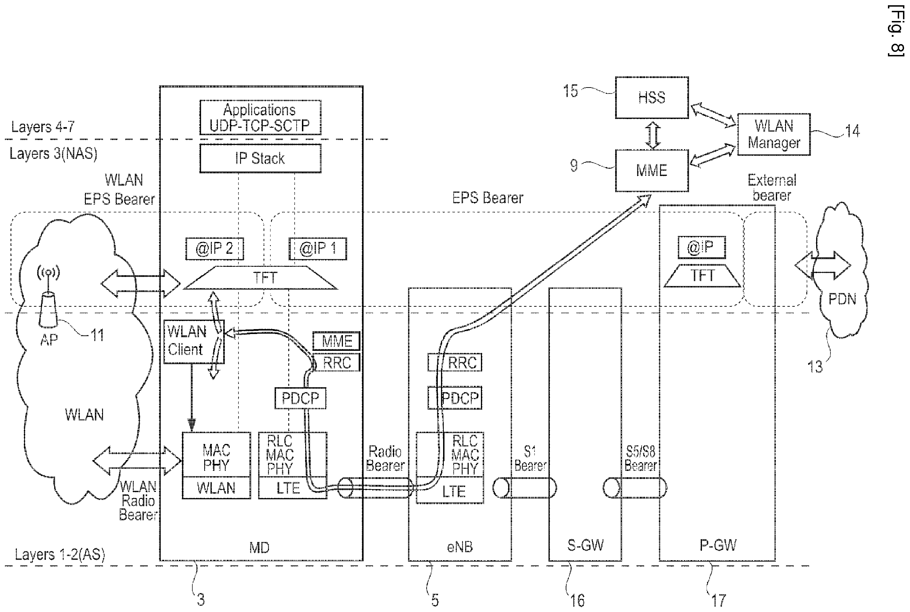

Fig. 8 illustrates the transfer of WLAN control information between the core network 7 and a mobile device 3 shown in Fig. 1.

Initially, the mobile device 3 has an EPS Bearer with the core network 7, and can be reached at an allocated IP address (@IP 1). The EPS Bearer also defines the applicable TFT filters for this IP address. When the mobile device 3 is within the coverage area of an access point 11 that it is capable of connecting via, and there is a need for this mobile device 3 to initiate communication, the MME 9 with the support of the WLAN Manager 14 instructs the mobile device 3 to set up a WLAN EPS Bearer. The WLAN EPS bearer has associated control/configuration parameters for allocating a second IP address (@IP 2) for the mobile device 3 and for applying associated TFT filters.

In order to set up the new WLAN EPS bearer for a mobile device 3, the MME 9 requests authorisation from the HSS 15 for this mobile device 3 to access to the WLAN 12. If the HSS 15 confirms that the mobile device 3 is authorised to access the given WLAN 12, the MME 9 request the WLAN Manager 14 to create the WLAN EPS bearer and associated WLAN Radio Bearer. The MME 9 then sends the WLAN control information to the WLAN client of the mobile device 3, via the base station 5 serving this mobile device 3.

The WLAN manager control information contains parameters related to the Access Stratum (AS) and/or the Non-Access Stratum (NAS) configuration of the mobile device 3. These correspond to Layers 1-2 (AS) and Layer 3 (NAS) of the 3GPP protocols. Layers 4-7 are the so-called higher layers and provide applications such as UDP, TCP, SCTP, and also end user applications, such as browser, telephony application, and so on.

The WLAN Manager control information related to the AS can, for example, be for setting, inter alia:
- the UE WLAN mode, i.e. station mode (STA) or access point mode (AP), WiFi adhoc mode, or Wi-Fi direct mode;
- the WLAN authentication parameters, i.e. EAP-SIM, EAP-AKA, etc;
- the WLAN channel/frequency parameters;
- the WLAN security parameters, i.e. WPA; and/or
- the WLAN maximum transmission power.

The WLAN manager control information related to the NAS can, for example include:
- information related to the IP address allocation scheme, such as information to direct use of Dynamic Host Configuration Protocol (DHCP), a specific IP address to be used with the IP mask, the default IP router, etc; and/or
- the Traffic Flow Template (TFT) filtering parameters.

The WLAN control information is embedded in a Protocol Data Unit (PDU) before forwarding to the mobile device 3 via the base station 5. The PDU might be formatted according to SNMP, NETCONF XML, or any suitable management protocol supported by the WLAN client of the mobile device 3. The WLAN PDU is transported from the MME 9 to the mobile device 3 using the S1-AP and Uu interfaces (not shown). The PDU is delivered to the RRC component of the base station 5, where it is encapsulated and forwarded, via the Packet Data Convergence Protocol (PDCP) component, towards the lower layers of the protocol stack, e.g. the RLC, MAC, and PHY layers to be transferred to the mobile device 3 using LTE signalling.

The mobile device 3 receives the LTE signalling containing the encapsulated PDU at the lowest level of the protocol stack and forwards it upwards via the PHY, MAC, RLC layers, and via the PDCP component, to the RRC component of the mobile device 3. The RRC component will detect that the PDU was sent by the MME 9 and forwards its contents to the WLAN client for processing.

The WLAN client applies the relevant AS and/or NAS parameters from the received WLAN control information and thus creates the WLAN EPS bearer and associated WLAN Radio Bearer. This bearer can be used to reach the mobile device 3 via its second IP address (@IP 2). In order to establish a communication link between this mobile device 3 and any other device on the WLAN 12, the mobile device 3 is addressed using "IP 2" and user traffic is routed using the WLAN EPS Bearer and WLAN Radio Bearer, thus freeing up resources in the E-UTRAN network.

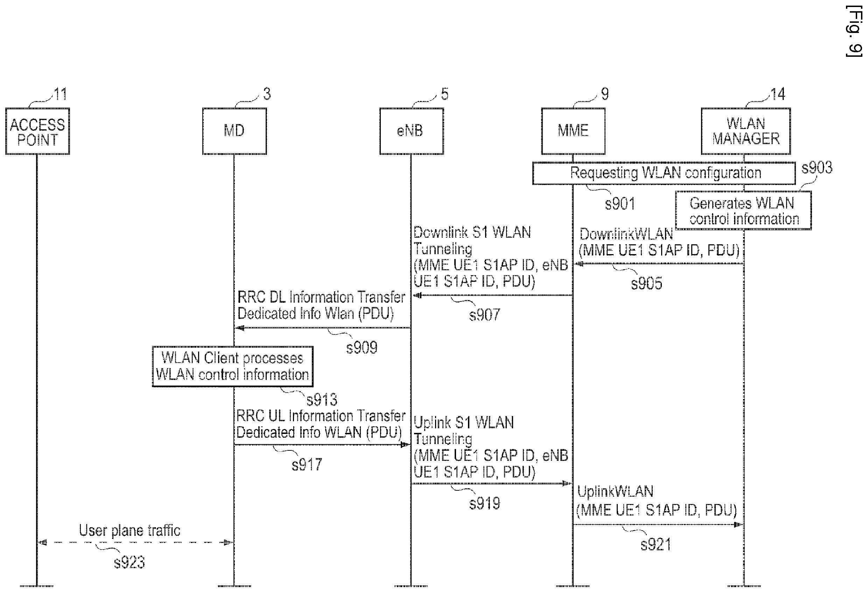

Fig. 9 is a signalling diagram indicating a procedure by which the MME remotely sets up a WLAN connection for a mobile device forming part of the system shown in Fig. 1. In this embodiment, the MME 9 requests WLAN configuration information from the WLAN Manager 14, as shown in steps s901. The WLAN Manager 14 generates, at step s903, the WLAN control information. This step might be performed upon a request from the MME 9 or even before receiving such request (i.e. before step s901), for example upon a request from the HSS 15 (not shown). The WLAN control information might be specific to a given WLAN 12 or might comprise default parameters only that are adopted based on information relating to the mobile device 3.

In step s905, the WLAN Manager 14 forwards the WLAN control information in a PDU to the MME 9 using a new message referred to herein as "DownlinkWLAN" over the S1-WLAN interface. However, a different message might be used as well. Besides the PDU, the DownlinkWLAN message contains e.g. information relating to the MME 9 serving the mobile device 3 (MME UE1 S1AP ID).

In step s907, the WLAN PDU is transported from the MME 9 to the base station 5 over the S1-AP interface using a new message type named, as an example, "Downlink S1 WLAN Tunneling". Alternatively, the "DownlinkNASTransport" message or a different message can be used instead. The Downlink S1 WLAN Tunneling message also contains the MME UE1 S1AP ID and an identification of the base station 5 for the mobile device 3 (eNB UE1 S1AP ID).

In step s909, the WLAN control information is transported over the Uu interface, i.e. from the base station 5 to the mobile device 3 using the "DLInformationTransfer" message of the RRC protocol (as defined in 3GPP TS 36.331). A new element, in this example named "DedicatedInfoWLAN" is used to identify the WLAN control information.

When the message is received in the mobile device 3, the RRC protocol delivers the contents of the "DedicatedInfoWLAN" element to the WLAN Client of the mobile device 3. In step s913, the WLAN Client processes the WLAN control information and uses the received parameters to control the WLAN driver of the mobile device 3.

In step s917, the mobile device 3 sends back a response to the base station 5, using the "UL Information Transfer" RRC message, which contains the "DedicatedInfoWLAN" element and also identifies the received PDU.

Upon receiving this message, in step s919, the base station 5 sends the "Uplink S1 WLAN Tunneling" message to the MME 9. Alternatively, the "UplinkNASTransport" message can be used as well.

Finally, the WLAN Manager 14 receives confirmation from the MME 9, in step s921, using the "Uplink WLAN" message and identifying the PDU sent out in earlier step s905.

In step s923, the mobile device 3 exchanges user plane traffic with the access point 11 using the newly established WLAN EPS bearer and associated WLAN Radio Bearer. Although step s923 is shown after steps s917 to s921, the mobile device 3 might start exchanging user plane traffic with the access point 11 immediately after step s913, i.e. after the WLAN Client has applied the received parameters to control the WLAN driver of the mobile device 3. Therefore, step s923 might precede or coincide with any of steps s917 to s923.

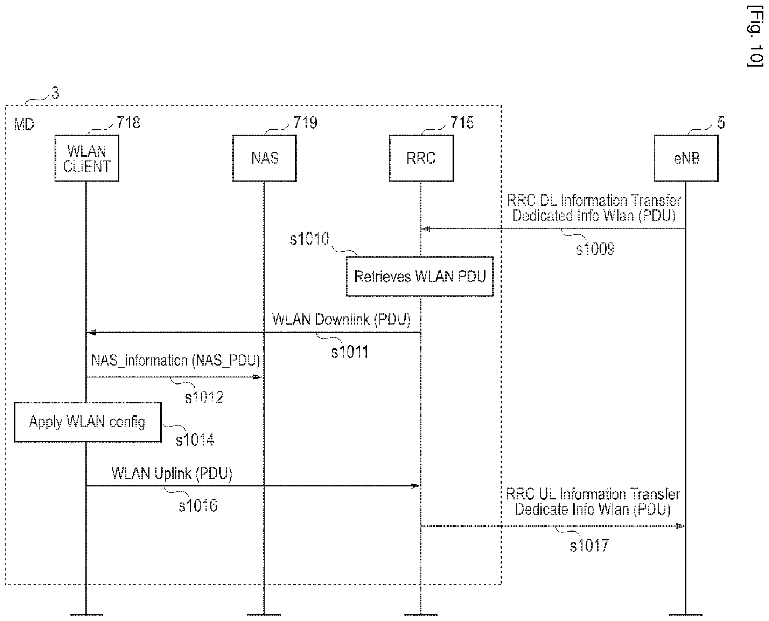

Fig. 10 is a signalling diagram indicating a procedure by which the mobile device forming part of the system shown in Fig. 1 applies the received WLAN control information.

The procedure starts at step s1009 (which corresponds to step s909 of Fig. 9), in which the WLAN control information is received by the RRC module 715 of the mobile device 3, using the "DLInformationTransfer" RRC message. The "DedicatedInfoWLAN" element is used to identify the WLAN control information.

In step s1010, the RRC module 715 retrieves the WLAN PDU from the received message. Next, in step s1011, the contents of the PDU are forwarded to the WLAN Client 717.

In step s1012, the WLAN Client 717 sends the NAS PDU to the NAS layer (NAS module 719) and applies the WLAN configuration. In step s 1014, the WLAN Client 717 processes the rest of the WLAN control information and applies the received configuration data to control the WLAN driver of the mobile device 3.

In step s1016, the WLAN Client 717 sends the "WLAN Uplink" response back to the RRC module 715, confirming that the contents of the PDU has been actioned. In step s1017, which corresponds to step s917 of Fig. 9, the RRC module 715 sends a response to the base station 5 using the "UL Information Transfer" RRC message, which contains the "DedicatedInfoWLAN" element and also identifies the received PDU.

The mobile device 3 is now ready to use the established WLAN EPS bearer and associated WLAN Radio Bearer.

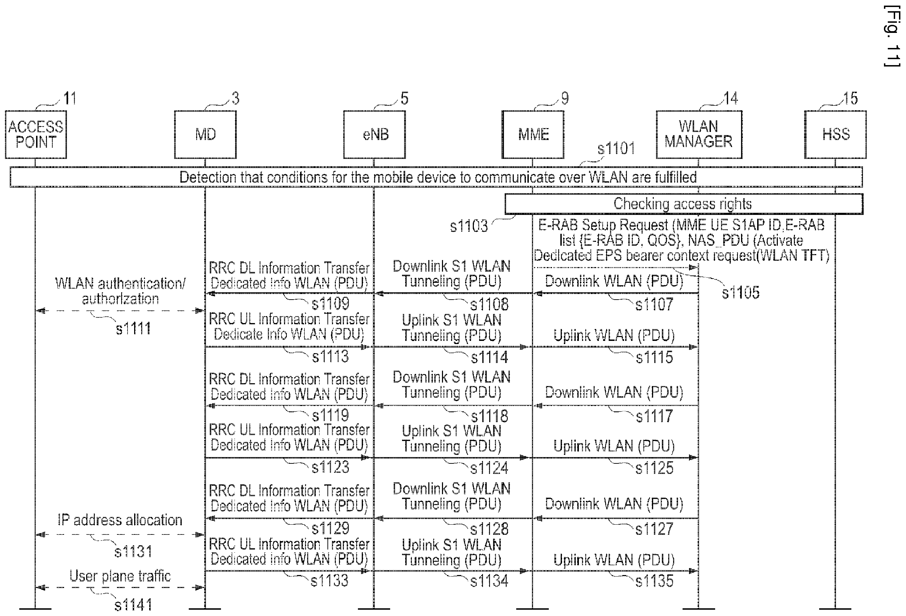

Fig. 11 is a signalling diagram indicating a variation on the procedure shown in Fig. 9. In Figures 9 and 11, like named messages are identical, however, they might carry different WLAN control information.

In step s1101, it is detected that the conditions for the mobile device 3 are met to communicate over a WLAN 12. This might be based on, for example, the proximity of the mobile device 3 to an access point 11, or based on the name of the WLAN 12 stored in both the WLAN Manager 14 and the mobile device's 3 WLAN client. Therefore, in step s1103, the MME 9 contacts the HSS 15 for checking whether this mobile device 3 has access rights to use the given WLAN 12.

In step s1105, the MME 9 requests the WLAN configuration information from the WLAN Manager 14, by sending an "E-RAB Setup Request" message and indicating the required parameters for the WLAN bearer. This message includes, amongst others, an identification of the MME 9 serving the mobile device 3 (MME UE S1AP ID), the E-RAB list with the E-RAB ID and the applicable quality of service, and also the non-access stratum protocol data unit (NAS_PDU) requesting to activate a dedicated EPS bearer context and setting the TFT for the WLAN 12.

In steps s1107 to s1109the WLAN control information is delivered to the mobile device 3. The WLAN control information might be related to the activation of the WLAN client of the mobile device 3, e.g. in a WI-Fi Station mode. The mobile device 3 is then able to perform the authentication and authorization procedures to access to the access point 11. The WLAN control information might also comprise a security parameter such as the ciphering mode (e.g. WPA, WEP, etc). In this example, the control information activates the WLAN client of the mobile device 3 to authenticate with the WLAN 12 so that, in step s1111, the mobile device 3 and the access point 11 perform the authentication and authorization procedures.

Steps s1113 to s1115, which generally correspond to steps s917 to s921 of Fig. 9, the mobile device 3 confirms that the WLAN control information has been actioned.

Next, as illustrated in steps s1117 to s1125, which generally correspond to steps s905 to 921 of Fig. 9, a second set of WLAN control information is sent to the WLAN client of the mobile device 3 from the WLAN Manager 14. This set of WLAN control information might comprise, for example, AS related control information, such as the WLAN QoS parameters, TFT filters, a WLAN radio bearer associated with WLAN QoS parameters, etc.

Steps s1127 to s1135, which also generally correspond to steps s905 to s921 of Fig. 9, illustrate the delivery of a third set of WLAN control information from the WLAN Manager 14 to the WLAN client of the mobile device 3. This set of control information might comprise, for example, the NAS parameters, which allow the mobile device 3 to get an IP address and to apply specific TFT for the WLAN traffic.

In step s1131, the mobile device 3 and the access point 11 perform an IP address allocation procedure, and finally, in step s1141, they begin exchanging user plane traffic according to the previously received set(s) of WLAN control information.

### Modifications and Alternatives

Detailed embodiments have been described above. As those skilled in the art will appreciate, a number of modifications and alternatives can be made to the above embodiments whilst still benefiting from the inventions embodied therein. By way of illustration only a number of these alternatives and modifications will now be described.

In the above embodiment, two mobile devices were allowed to establish a local area network based D2D connection with each other via an access point. As those skilled in the art will appreciate one of the mobile devices 3 can be configured to act as an access point 11. In that case the D2D connection is established between the two mobile devices without requiring any further infrastructure. Further, in the above embodiments, a plurality of complementary WLAN EPS Bearers may be set up, one between each mobile device and the associated access point.

In the above embodiments, the mobile device received the WLAN configuration information from a core network entity, e.g. the mobility management entity, via an E-UTRAN base station (eNB). It will be appreciated that the mobile device might receive the WLAN control information via any base station operating according to a different standard, such as GSM, WCDMA, CDMA2000, LTE, LTE-A. Such base stations can be referred to as BS, BTS, NodeB, etc. Alternatively, the WLAN configuration information might be received from the base station indirectly, e.g. using a relay node (RN) or a donor base station (DeNB).

In the above embodiments, the mobile device received the WLAN configuration information via a base station. It will be appreciated that the mobile device might receive the WLAN control information via an access point, i.e. if the mobile device is already using this access point. Alternatively, the WLAN control information might be sent in two or more parts. In this case, some or all parts of the WLAN control information might be received via a base station, and some or all parts might be received via an access point.

Furthermore, D2D connections can be established between three or more mobile devices, such that the users of the mobile devices may be connected together in local area network. On such a local area network, various applications like conference call, multi-player gaming, etc. can be realised.

In the description of Fig. 11, three rounds of messages and three sets of WLAN control information has been explained. However, those skilled in the art will appreciate that these sets of control information can be delivered in fewer rounds, or in a different order. Some sets of control information can be combined or omitted. For example, if the mobile device 3 has already authenticated with the WLAN 12, there is no need to instruct it to do so.

Proximity information that indicates when two or more mobile devices are within radio range of each other (and hence suitable for a D2D connection) may be provided to the base stations by a node in or connected to the core network or by the mobile devices themselves using for example location services as described in 3GPP TS 23.271 or WLAN discovery methods such as the one defined by the Wi-Fi Peer-to-Peer (P2P) Specification v1.1 by the Wi-Fi Alliance. The proximity information might comprise the provision of an identification of an available access point or the name of a WLAN network that the mobile device can access. A WLAN network might comprise of a number of associated access points.

The above embodiment has described a preferred way of generating WLAN configuration information and the preferred way of signalling that information to the mobile device for establishing a D2D communication link. As those skilled in the art will appreciate, other signalling messages may be used to carry the shared security information towards the respective user devices. Alternatively, the WLAN configuration information might be provided via the mobile device's user plane or via the EPS bearer.

The above embodiment has described a preferred way of setting up a WLAN EPS Bearer and a WLAN Radio Bearer. Alternatively, the same procedures can be used to modify or release an existing WLAN EPS Bearer and/or a WLAN Radio Bearer.

In the above embodiments, the mobile devices are cellular telephones. It will be appreciated that the above embodiments could be implemented using devices other than mobile telephones such as, for example, personal digital assistants, laptop computers, web browsers, etc.

Although as described above the WLAN Manager generates the WLAN configuration information, this information may be generated by another network device, such as the home subscriber server or the mobility management entity. The WLAN Manager thus may be implemented either as a standalone unit or may be implemented as part of the mobility management entity, as part of the base station, or as part of the home subscriber server or any other network entity connected to the core network. The WLAN Manager can be shared by multiple core networks.

Although the setting up of D2D communication paths have been described between mobile devices within the same communications network, the D2D communication paths according to the invention may be set up between mobile devices located in different communications networks. In this case, the mobility management entities (and the base stations) for the respective mobile device are also located in different networks. The WLAN Manager can be shared by, or distributed over, multiple core networks.

In the above description, the WLAN manager 14, the mobility management entity 9, the base station 5, and the mobile devices 3 are described for ease of understanding as having a number of discrete functional components or modules. Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities.

In the above embodiments, the term access point has been used for illustrative purposes only and in no way shall be considered limiting the invention to any particular standard. Embodiments of the invention are applicable to systems using any type of node for accessing a local area network irrespective of the access technology used thereon. In the above embodiments, WLAN has been used as an example non-3GPP radio access technology. However, any access technologies covered in the 3GPP TS 23.402 standard, thus any other radio access technology (i.e. WiFi, WiMAX) or any wired or wireless communications technology (i.e. LAN, Bluetooth) can be used for creating a direct link between the two (or more) mobile devices in accordance with the above embodiments. The above embodiments are applicable to non-mobile or generally stationary user equipment as well.

The terms MO and MT calls as used herein include e.g. voice calls, voice over IP (VoIP) calls, any type of data connections, and any communications activity by the mobile device 3 under the control of the LTE (or other communications technology) core network 7.

In the above embodiments, a number of software modules were described. As those skilled in the art will appreciate, the software modules may be provided in compiled or un-compiled form and may be supplied to the WLAN manager, to the mobility management entity, to the base station or to the mobile device as a signal over a computer network, or on a recording medium. Further, the functionality performed by part or all of this software may be performed using one or more dedicated hardware circuits. However, the use of software modules is preferred as it facilitates the updating of the WLAN Manager 14, the mobility management entity 9, the base station 5 and the mobile devices 3 in order to update their functionalities.

Various other modifications will be apparent to those skilled in the art and will not be described in further detail here.

This software can be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, and a CD-R/W, and a semiconductor memory (such as a mask ROM, a PROM (Programmable ROM), an EPROM (Erasable PROM), a flash ROM, and a RAM (Random Access Memory)). Further, the program can be supplied to computers by using various types of transitory computer readable media. Examples of the transitory computer readable media include an electrical signal, an optical signal, and an electromagnetic wave. The transitory computer readable media can be used to supply programs to computer through a wire communication path such as an electrical wire and an optical fiber, or wireless communication path.

### Industrial Applicability

The present invention relates to a communications system provided by a wireless communications system and devices thereof operating according to the 3rd Generation Partnership Project (3GPP) standards or equivalents or derivatives thereof.

### [Reference Signs List]

1 telecommunications network
3 mobile devices
3-1 mobile device
3-2 mobile device
5 base stations
7 core network
9 mobility management entity (MME)
11 access point (AP)
12 WLAN
13 external IP network
14 WLAN Manager
15 home subscriber server (HSS)
16 serving gateway (S-GW)
17 packet data network gateway (P-GW)
18 endpoint of communication
401 transceiver circuit
403 MME interface
405 home subscriber server interface
407 controller
409 memory
411 operating system
413 communications control module
415 WLAN control module
417 WLAN database
501 transceiver circuit
503 base station interface
505 home subscriber server interface
506 WLAN manager interface
507 controller
509 memory
511 operating system
513 communications control module
515 EPS bearer control module
517 WLAN bearer control module
519 WLAN communication module
601 transceiver circuit
603 antenna
605 mobility management entity interface
606 gateway interface
607 controller
609 memory
611 operating system
613 communications control module
615 RRC module
701 transceiver circuit
703 antenna
705 user interface
707 controller
709 memory
711 operating system
713 communications control module
715 RRC module
717 WLAN module
718 WLAN client
719 non-access stratum (NAS) module

## Claims

1. A communications device for use in a communications network (1) having a core network (7) and a base station (5), the communications device (3) comprising:
means for communicating with the base station (5) using a first radio access technology;
means for communicating with a local area network (12) using a second radio access technology which is an access technology according to a wireless local area network, WLAN, standard and different than said first radio access technology;
wherein said means for communicating with the base station (5) using the first radio access technology is operable to receive, from said base station (5), using said first radio access technology, when the communications device (3) and another communications device (3) are within radio range of each other, control information comprising at least an IP address and associated Traffic Flow Template, TFT, filtering parameters for configuring a WLAN channel for direct communication with another communications device (3) via the local area network using said second radio access technology, wherein the received control information is based on proximity information that indicates when the communications device (3) and another communications device (3) are within radio range of each other; and
means for configuring, based on said received control information, said WLAN channel for direct communication with the other communications device (3) via the local area network using said second radio access technology.

2. The communications device according to claim 1 wherein the control information comprises at least one of an indication to authenticate with said local area network (12), an access stratum parameter, and a non-access stratum parameter.

3. The communications device according to claim 1, wherein the proximity information comprises the provision of an identification of an available access node.

4. The communications device according to claim 1, wherein the proximity information comprises the provision of a name of a WLAN network that the communications device can access.

5. A method performed by a communications device in a communications network (1) having a core network (7) and a base station (5), the method comprising:
communicating with the base station (5) using a first radio access technology;
communicating with a local area network (12) using a second radio access technology which is an access technology according to a wireless local area network, WLAN, standard and different than said first radio access technology;
wherein said step of communicating with the base station (5) using the first radio access technology comprises receiving, from said base station (5), using said first radio access technology, when the communications device (3) and another communications device (3) are within radio range of each other, control information comprising at least an IP address and associated Traffic Flow Template, TFT, filtering parameters for configuring a WLAN channel for direct communication with another communications device (3) via the local area network (12) using said second radio access technology, wherein the received control information is based on proximity information that indicates when the communications device (3) and another communications device (3) are within radio range of each other; and
configuring, based on said received control information, said WLAN channel for direct communication with the other communications device (3) via the local area network (12) using said second radio access technology.

6. A non-transitory computer-readable information recording medium storing a program that, when implemented on a programmable processor of a communication device, causes the communication device to perform a method according to claim 5.

## Patentansprüche

1. Kommunikationsvorrichtung zur Verwendung in einem Kommunikationsnetz (1) mit einem Kernnetz (7) und einer Basisstation (5), wobei die Kommunikationsvorrichtung (3) aufweist:
eine Einrichtung zum Kommunizieren mit der Basisstation (5) unter Verwendung einer ersten Funkzugangstechnik;
eine Einrichtung zum Kommunizieren mit einem lokalen Netzwerk (12) unter Verwendung einer zweiten Funkzugangstechnik, die eine Zugangstechnik gemäß einem drahtlosen lokalen Netzwerk, WLAN-, Standard und von der ersten Funkzugangstechnik verschieden ist,
wobei die Einrichtung zum Kommunizieren mit der Basisstation (5) unter Verwendung der ersten Funkzugangstechnik dafür betreibbar ist, von der Basisstation (5) unter Verwendung der ersten Funkzugangstechnik, wenn die Kommunikationsvorrichtung (3) und eine andere Kommunikationsvorrichtung (3) sich innerhalb einer Funkreichweite voneinander befinden, Steuerinformation zu empfangen, die mindestens eine IP-Adresse und zugehörige Traffic Flow Template, TFT-, Filterparameter zum Konfigurieren eines WLAN-Kanals für eine Direktkommunikation mit einer anderen Kommunikationsvorrichtung (3) über das lokale Netzwerk unter Verwendung der zweiten Funkzugangstechnik enthält, wobei die empfangene Steuerinformation auf Näherungsinformation basiert, die anzeigt, wenn die Kommunikationsvorrichtung (3) und eine andere Kommunikationsvorrichtung (3) sich in Funkreichweite voneinander befinden; und
eine Einrichtung zum Konfigurieren des WLAN-Kanals für eine Direktkommunikation mit der anderen Kommunikationsvorrichtung (3) über das lokale Netzwerk unter Verwendung der zweiten Funkzugangstechnik basierend auf der empfangenen Steuerinformation.

2. Kommunikationsvorrichtung nach Anspruch 1, wobei die Steuerinformation mindestens eine Information unter einer Anzeige zum Authentifizieren bei dem lokalen Netzwerk (12), einem Access-Stratum-Parameter und einem Non-Access-Stratum-Parameter aufweist.

3. Kommunikationsvorrichtung nach Anspruch 1, wobei die Näherungsinformation das Bereitstellen einer Identifizierung eines verfügbaren Zugangsknotens aufweist.

4. Kommunikationsvorrichtung nach Anspruch 1, wobei die Näherungsinformation das Bereitstellen eines Namens eines WLAN-Netzwerks aufweist, auf das die Kommunikationsvorrichtung zugreifen kann.

5. Verfahren, das durch eine Kommunikationsvorrichtung in einem Kommunikationsnetz (1) mit einem Kernnetz (7) und einer Basisstation (5) ausgeführt wird, wobei das Verfahren aufweist:
Kommunizieren mit der Basisstation (5) unter Verwendung einer ersten Funkzugangstechnik;
Kommunizieren mit einem lokalen Netzwerk (12) unter Verwendung einer zweiten Funkzugangstechnik, die eine Zugangstechnik gemäß einem drahtlosen lokalen Netzwerk, WLAN-, Standard und von der ersten Funkzugangstechnik verschieden ist,
wobei der Schritt zum Kommunizieren mit der Basisstation (5) unter Verwendung der ersten Funkzugangstechnik das Empfangen von Steuerinformation, die mindestens eine IP-Adresse und zugehörige Traffic Flow Template, TFT-, Filterparameter zum Konfigurieren eines WLAN-Kanals für eine Direktkommunikation mit einer anderen Kommunikationsvorrichtung (3) über das lokale Netzwerk (12) unter Verwendung der zweiten Funkzugangstechnik von der Basisstation (5) unter Verwendung der ersten Funkzugangstechnik aufweist, wenn sich die Kommunikationsvorrichtung (3) und eine andere Kommunikationsvorrichtung (3) innerhalb der Funkreichweite voneinander befinden; und
Konfigurieren des WLAN-Kanals basierend auf der empfangenen Steuerinformation für eine Direktkommunikation mit der anderen Kommunikationsvorrichtung (3) über das lokale Netzwerk (12) unter Verwendung der zweiten Funkzugangstechnik.

6. Nicht-flüchtiges computerlesbares Informationsaufzeichnungsmedium, das ein Programm speichert, das, wenn es auf einem programmierbaren Prozessor einer Kommunikationsvorrichtung implementiert wird, die Kommunikationsvorrichtung veranlasst, ein Verfahren nach Anspruch 5 auszuführen.

## Revendications

1. Dispositif de communication destiné à être utilisé dans un réseau de communication (1) ayant un réseau central (7) et une station de base (5), le dispositif de communication (3) comprenant :
des moyens pour communiquer avec la station de base (5) en utilisant une première technologie d'accès radio ;
des moyens pour communiquer avec un réseau local (12) en utilisant une deuxième technologie d'accès radio qui est une technologie d'accès selon une norme de réseau local sans fil, WLAN, et différente de ladite première technologie d'accès radio ;
dans lequel lesdits moyens pour communiquer avec la station de base (5) en utilisant la première technologie d'accès radio sont exploitables pour recevoir, depuis ladite station de base (5), en utilisant ladite première technologie d'accès radio, lorsque le dispositif de communication (3) et un autre dispositif de communication (3) sont à portée radio l'un de l'autre, des informations de commande comprenant au moins une adresse IP et des paramètres de filtrage de modèle de flux de trafic, TFT, associés pour configurer un canal WLAN pour une communication directe avec un autre dispositif de communication (3) via le réseau local en utilisant ladite deuxième technologie d'accès radio, dans lequel les informations de commande reçues sont basées sur des informations de proximité qui indiquent quand le dispositif de communication (3) et un autre dispositif de communication (3) sont à portée radio l'un de l'autre ; et
des moyens pour configurer, sur la base desdites informations de commande reçues, ledit canal WLAN pour une communication directe avec l'autre dispositif de communication (3) via le réseau local en utilisant ladite deuxième technologie d'accès radio.

2. Dispositif de communication selon la revendication 1, dans lequel les informations de commande comprennent au moins l'un parmi une indication d'authentification auprès dudit réseau local (12), un paramètre de strate d'accès, et un paramètre de strate sans accès.

3. Dispositif de communication selon la revendication 1, dans lequel les informations de proximité comprennent la fourniture d'une identification d'un nœud d'accès disponible.

4. Dispositif de communication selon la revendication 1, dans lequel les informations de proximité comprennent la fourniture d'un nom d'un réseau WLAN auquel le dispositif de communication peut accéder.

5. Procédé réalisé par un dispositif de communication dans un réseau de communication (1) ayant un réseau central (7) et une station de base (5), le procédé comprenant :
la communication avec la station de base (5) en utilisant une première technologie d'accès radio ;
la communication avec un réseau local (12) en utilisant une deuxième technologie d'accès radio qui est une technologie d'accès selon une norme de réseau local sans fil, WLAN, et différente de ladite première technologie d'accès radio ;
dans lequel ladite étape de communication avec la station de base (5) en utilisant la première technologie d'accès radio comprend la réception, depuis ladite station de base (5), en utilisant ladite première technologie d'accès radio, lorsque le dispositif de communication (3) et un autre dispositif de communication (3) sont à portée radio l'un de l'autre, d'informations de commande comprenant au moins une adresse IP et des paramètres de filtrage de modèle de flux de trafic, TFT, associés pour configurer un canal WLAN pour une communication directe avec un autre dispositif de communication (3) via le réseau local (12) en utilisant ladite deuxième technologie d'accès radio, dans lequel les informations de commande reçues sont basées sur des informations de proximité qui indiquent quand le dispositif de communication (3) et un autre dispositif de communication (3) sont à portée radio l'un de l'autre ; et
la configuration, sur la base desdites informations de commande reçues, dudit canal WLAN pour une communication directe avec l'autre dispositif de communication (3) via le réseau local (12) en utilisant ladite deuxième technologie d'accès radio.

6. Support d'enregistrement d'informations lisible par ordinateur non transitoire stockant un programme qui, lorsqu'il est mis en œuvre sur un processeur programmable d'un dispositif de communication, amène le dispositif de communication à réaliser un procédé selon la revendication 5.
